# EUROPEAN PATENT APPLICATION

(11) **EP 2 161 186 A1**
(43) Date of publication of application: **10.03.2010**
(21) Application number: 09011351.5
(22) Date of filing: 04.09.2009
(51) Int. Cl.: B62J 15/02

(54) **Anchoring device for a mudguard**

(30) Priority: 04.09.2008 IT VI20080207
(71) Applicant: Passuello, Ivan, 31020 San Zenone Degli Ezzelini TV (IT)
(72) Inventor: Passuello, Ivan, 31020 San Zenone Degli Ezzelini TV (IT)
(74) Representative: Forattini, Amelia

(57) **Abstract**

An anchoring device (1), particularly for anchoring mudguards (50) to frames and parcel racks, which comprises an engagement member (2) that can be detachably associated with a mudguard (50). The device (1) comprises an articulated arm (10) which is joined to the engagement member (2) and can be fastened to the frame of a vehicle or to a parcel rack.

## Description

The present invention relates to an anchoring device, particularly for anchoring mudguards to frames and parcel racks of vehicles, mainly but not exclusively bicycles.

As is known, city or touring bicycles are very often equipped with several accessories, among which mudguards and parcel racks are practically inevitable.

The presence of parcel racks, which act as an anchoring support, is therefore generally utilized to apply the mudguards.

In particular, mudguards are currently fastened with the aid of metallic clips joined by means of screws or rivets.

As an alternative, plates previously provided with slotted through holes are used and are also fastened by means of screws or rivets.

The conventional types of device can be improved.

The anchoring of mudguards to parcel racks is in fact currently rather laborious, because it very often requires the pre-assembly of suitable supports on both components and requires correct adjustment of the length of the clips or of the pre-perforated plates.

Assembly operations performed according to the prior art are therefore excessively onerous, because they require considerable effort and particular attention in performing them. Accordingly, assembly operations performed according to the prior art are onerous both in terms of time increase and in terms of cost increase.

Also, the use of screws, nuts and other metallic components generally causes oxidation problems, with the consequent onset of rust which considerably shortens the life of the components and greatly reduces the aesthetic value of the application.

The aim of the invention is to overcome the problems described above, by providing an anchoring device, particularly for anchoring mudguards to frames and parcel racks, which allows to perform precise, safe and quick assemblies.

Within the scope of this aim, a particular object of the invention is to provide an anchoring device that can be used with all types of bicycle, because it is adapted to be applied to the various parcel racks and to the various frame sizes as well as to the different widths and heights of the mudguard.

Another object of the invention is to provide an anchoring device that can be easily replaced in case of breakage.

Another object of the invention is to provide an anchoring device that is pleasant and advantageous from a purely economic standpoint.

This aim, the objects mentioned and others that will become better apparent hereinafter are achieved by an anchoring device, particularly for anchoring mudguards to frames and parcel racks, comprising an engagement member that can be detachably associated with a mudguard, the anchoring device being **characterized in that** it comprises an articulated arm which is joined to the engagement member and can be coupled to the frame of a vehicle or to a parcel rack.

Further characteristics and advantages will become better apparent from the description of preferred but not exclusive embodiments of an anchoring device according to the invention, illustrated by way of non-limiting example in the accompanying drawings, wherein:
Figure 1 is a side view of an anchoring device according to the invention;
Figure 2 is a plan view of the anchoring device according to the invention;
Figure 3 is a front view of the anchoring device according to the invention;
Figure 4 is a perspective view of a pair of anchoring devices according to the invention applied to a mudguard;
Figure 5 is a side view of an anchoring device according to the invention, applied to a mudguard and to a parcel rack;
Figure 6 is a perspective view of another embodiment of a pair of anchoring devices according to the invention, applied to a mudguard;
Figure 7 is a front view of the anchoring devices of the preceding figure;
Figure 8 is a perspective view of a detail of one of the anchoring devices of Figure 6;
Figure 9 is a perspective view of an anchoring device according to the invention applied to a mudguard;
Figure 10 is another perspective view of the anchoring device of the preceding figure;
Figure 11 is another perspective view of the anchoring device of Figure 9;
Figure 12 is a perspective view of a detail of the anchoring device of Figure 9.

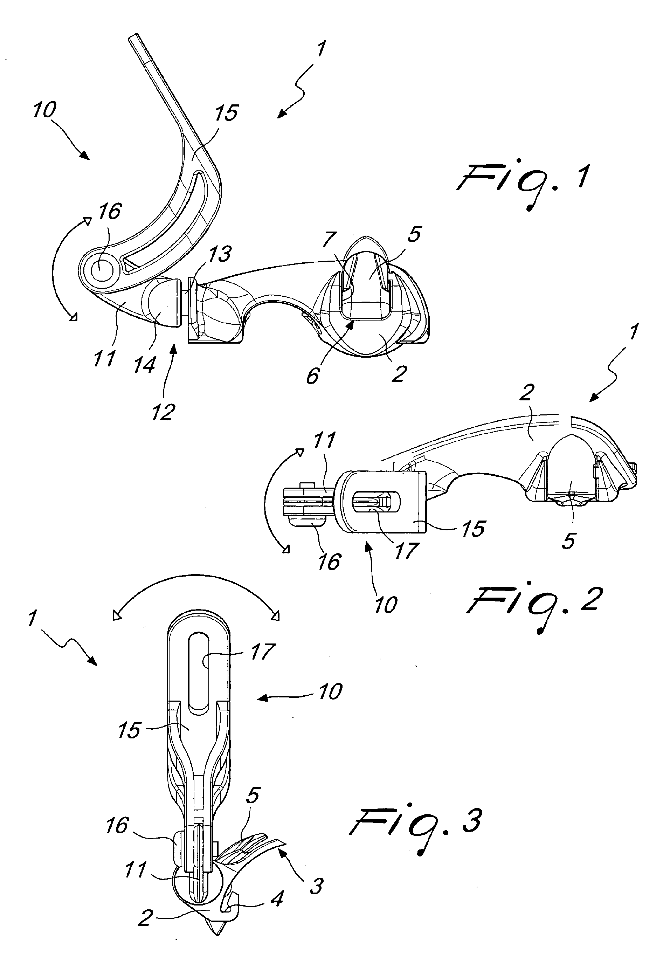

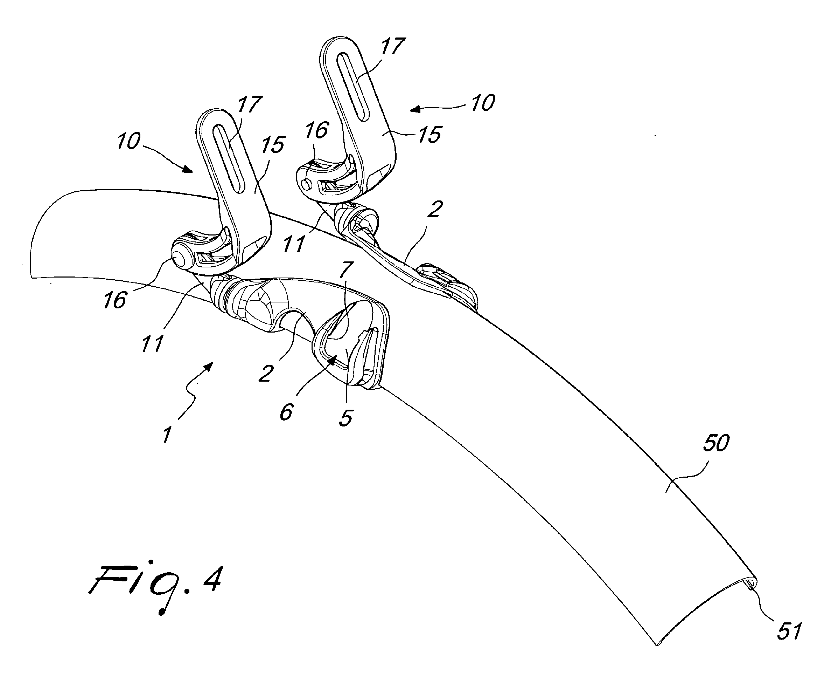

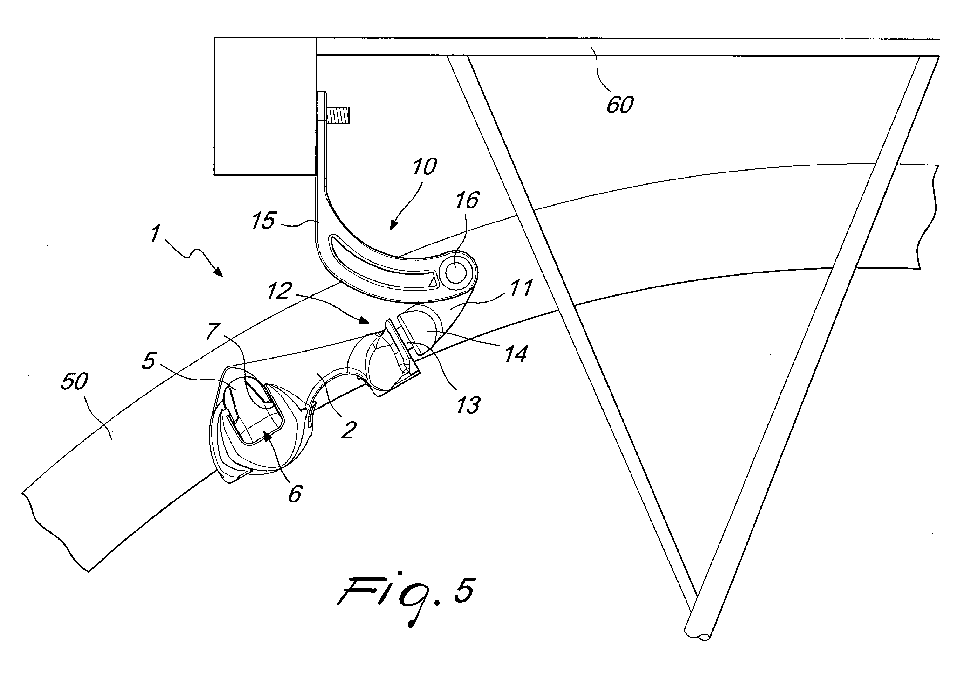

With reference to the cited Figures 1 to 5, an anchoring device, particularly for anchoring mudguards to frames and parcel racks, is generally designated by the reference numeral 1.

The anchoring device 1 is preferably made of molded synthetic material and has an engagement member 2, which can be detachably associated with the mudguard 50 of a vehicle which, in the specific case, is constituted by a bicycle.

The engagement member 2 is constituted by a substantially plate-like body, which is provided with a curved surface 3 whose shape is substantially complementary to the shape of the portion of the mudguard 50 on which it can rest.

A notch 4 is formed longitudinally on the engagement member 2. The notch 4 has a transverse cross-section that is substantially complementary to the transverse cross-section of the lateral edge 51 of the mudguard 50.

The notch 4 laterally delimits the curved surface 3, with a continuous or discontinuous configuration, and allows to detachably interlock the lateral edge 51 inside it.

A fastening lever 5 ensures the interlocking coupling between the engagement member 2 and the mudguard 50. In the closed condition of the fastening lever 5, i.e., when the lever is substantially parallel to the outer surface of the mudguard 50, the fastening lever 5 mechanically interferes with the mudguard 50, thus preventing the relative motion between the two members.

The fastening lever 5 is articulated to the outer part of the engagement member 2 with an articulation axis that is substantially parallel to the longitudinal axis of the notch 4. The fastening lever 5 is provided with a cam-like head 6, which is formed at its articulation axis and is directed toward the lateral edge 51.

The cam-like head 6 is designed so that its lug applies maximum pushing force to the outer surface of the mudguard 50 when the fastening lever 5 is closed.

A cavity 7 is formed on the engagement member 2. The cavity 7 is shaped substantially complementarily to the fastening lever 5.

The cavity 7 is adapted to accommodate the fastening lever 5 inside itself, so that the lever is arranged flush with the engagement member 2, when it is closed.

According to the invention, the anchoring device 1 comprises an articulated arm, generally designated by the reference numeral 10, which is joined to the engagement member 2 and can be fastened to the frame of the bicycle or to a parcel rack 60.

More particularly, the articulated arm 10 comprises a first member 11, which has a substantially arc-like shape and is connected to the engagement member 2 by means of an articulated joint 12, which allows to mate the two components according to infinite angular combinations.

The articulated joint 12 comprises a spherical pivot 13, which is formed on the engagement member 2, and a corresponding spherical dome 14, which is formed at one end of the first member 11.

The spherical pivot 13 and the spherical dome 14 may optionally be swapped, providing respectively the pivot 13 on one end of the first member 11 and the dome 14 on the engagement member 2.

The articulated arm 10 also comprises a second member 15, which can be fastened to the frame of a vehicle and in particular to a parcel rack 60. The second member 15 is connected to the first member 11 by means of an adjustable hinge 16, which allows to set the angle between the two members.

The second member 15 is substantially L-shaped, and a slotted hole 17 is formed at its free end and allows the insertion of a threaded member that fastens the anchoring device 1 to the parcel rack 60 or to the frame.

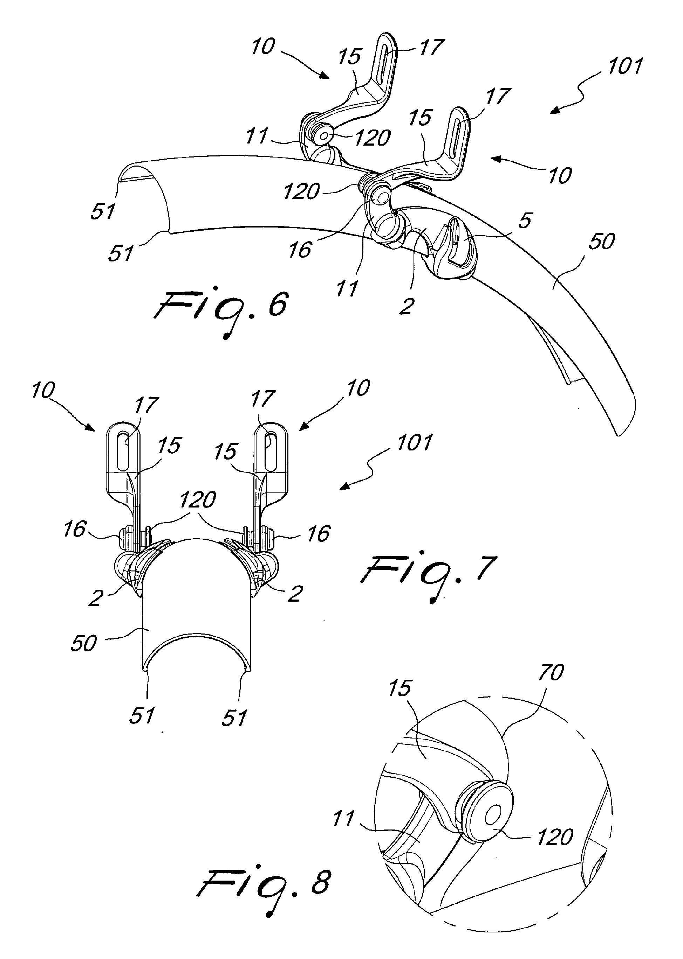

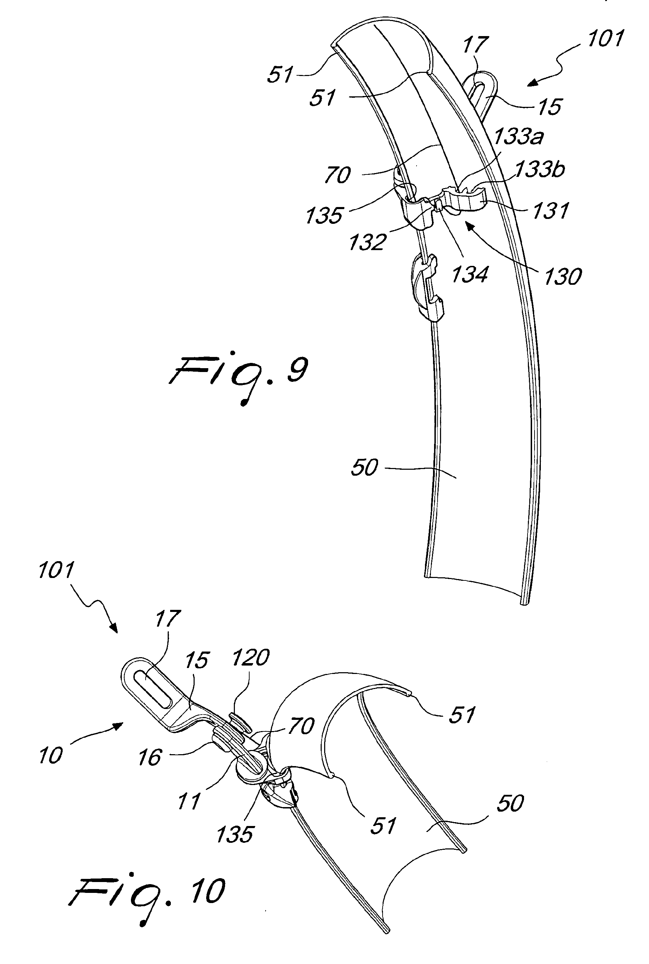

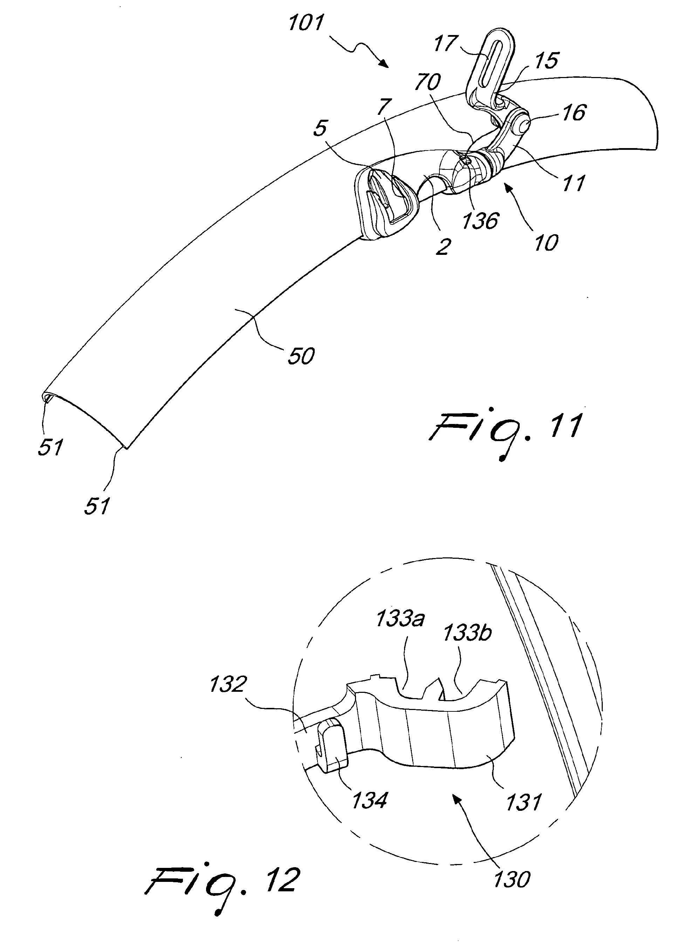

According to a further embodiment of the invention, shown in Figures 6 to 12, the anchoring device has been generally designated by the reference numeral 101.

The anchoring device 101 comprises a cable guiding spool 120, which is arranged substantially at the hinge 16. The cable guiding spool 120 can be provided monolithically with the pivot of the hinge 16 or can be applied detachably.

The cable guiding spool 120 allows to optimize the arrangement and the passage of conductors 70 for the wiring of the electrical system, thus ensuring their flexibility and correct bending radiuses.

The anchoring device 101 can be equipped with one or more cable retention clips 130, which assist the action of the cable guiding spool 120. The cable retention clips 130 are joined to the internal part of the engagement member 2 so that they can rest against the internal surface of the mudguard 50.

Each cable retention clip 130 comprises a contoured tab 131, which extends into a flexible stem 132 that is joined to the engagement member 2.

Two recesses 133a and 133b are formed on the contoured tab 131. The recesses 133a and 133b constitute the seat of a tubular insulating sheath, or otherwise allow the accommodation of one or more conductors 70.

Each cable retention clip 130 is provided with at least one grip portion 134, which protrudes from the flexible stem 132 in order to fasten conductors 70.

A channel 135 is formed laterally with respect to the flexible stem 132. The channel 135 runs transversely to the notch 4, surrounding part of its profile so as to form a path that facilitates the passage of each conductor 70 from the inside of the mudguard 50 to the outside.

The channel 135 ends with an exit hole 136, which passes through the outer part of the engagement member 2.

In the embodiments shown in Figures 6 to 12, the members that correspond to the members that have already been described with reference to the first embodiment shown in Figures 1 to 5 have been designated by the same reference numerals.

The operation and the use of the device according to the invention are described hereinafter.

The anchoring device 1 is associated with the mudguard 50 by inserting the lateral edge 51 of the mudguard 50 into the notch 4 and turning the engagement member 2 so that the curved surface 3 rests against the mudguard 50.

In this preparatory step, the fastening lever 5 remains open, i.e., transverse to the engagement member 2, so as to allow the anchoring device 1 to slide with respect to the mudguard 50.

Correct positioning of the engagement member 2 and adjustment of the articulated arm 10 by acting on the articulated joint 12 and on the adjustable hinge 16 are then performed.

In particular, by virtue of the adjustable hinge 16, the angle between the first member 11 and the second member 15 is defined and set as a function of the correct distance between the mudguard 50 and the upper part of the wheel.

The adaptation of the articulated arm 10 must place the slotted hole 17 or a portion of the frame proximate to the mudguard 60 so as to be able to couple the second member 15 by means of one or more screws.

When the anchoring device 1 is correctly arranged and installed, the fastening lever 5 is closed, so that the lug of its cam-like head 6 applies maximum pushing force to the outer surface of the mudguard 50, thus preventing the sliding of the engagement member 2.

The anchoring device according to the invention is particularly useful also in the wiring of the electrical system.

The presence of the cable guiding spool 120 and the cable retention clip 130, which can also be used separately, in fact allow to optimize the arrangement and passage of any conductors 70 by ensuring that they have correct radiuses of curvature.

In particular, each conductor 70 is associated with the internal surface of the mudguard 50 and proximate to the cable retention clip 130 it is inserted in one of the recesses 133a or 133b.

After retaining the conductor 70 by means of the grip portions 134, the conductor is rested in the channel 135 and is then made to exit through the exit hole 136.

At this point, the wiring can be completed by connecting the conductor 70 directly to the lamp.

As an alternative, the conductor 70 can be first partially wound around the cable guiding spool 120 and then connected to the lamp.

In practice it has been found that the anchoring device particularly for the application of mudguards to frames and parcel racks according to the invention fully achieves the intended aim, since it allows to perform precise, safe and quick assemblies, is visually pleasant and is advantageous from a purely economic standpoint.

Also, the anchoring device according to the invention can be used for all types of bicycle, adapting to the different parcel racks and to the different frame sizes as well as to the different widths and heights of the mudguard.

## Claims

1. An anchoring device, particularly for anchoring mudguards to frames and parcel racks, comprising an engagement member that can be detachably associated with a mudguard, the anchoring device being **characterized in that** it comprises an articulated arm which is joined to said engagement member and can be coupled to the frame of a vehicle or to a parcel rack.

2. The anchoring device according to claim 1, **characterized in that** said articulated arm comprises at least one first member which is connected to said engagement member by means of an articulated joint.

3. The anchoring device according to claim 1 or 2, **characterized in that** said articulated arm comprises a second member, which is connected to said first member by means of an adjustable hinge, said second member being substantially L-shaped and being associatable with said frame or with said parcel rack.

4. The anchoring device according to one or more of the preceding claims, **characterized in that** said articulated arm comprises at least one slotted hole formed at the free end of said second member.

5. The anchoring device according to one or more of the preceding claims, **characterized in that** said engagement member comprises at least one notch, said notch having a transverse cross-section that is substantially complementary with respect to the transverse cross-section of the lateral edge of said mudguard, said engagement member being detachably associatable by interlocking with said mudguard.

6. The anchoring device according to one or more of the preceding claims, **characterized in that** said engagement member comprises at least one fastening lever, said fastening lever having a head that is articulated to the outer part of said engagement member in order to mechanically interfere with the outer surface of said mudguard.

7. The anchoring device according to one or more of the preceding claims, **characterized in that** it comprises at least one cable guiding spool which is formed substantially at said hinge.

8. The anchoring device according to one or more of the preceding claims, **characterized in that** it comprises at least one cable retention clip that is joined to said engagement member, said cable retention clip being provided at the internal part of said engagement member.

9. The anchoring device according to one or more of the preceding claims, **characterized in that** said cable retention clip comprises a contoured tab, which is joined to said engagement member by means of a flexible stem, said contoured tab comprising at least one recess, the transverse cross-section of said recess being shaped substantially complementarily with respect to the transverse cross-section of a tubular insulating sheath.

10. The anchoring device according to one or more of the preceding claims, **characterized in that** said cable retention clip comprises at least one grip portion joined to said flexible stem.

11. The anchoring device according to one or more of the preceding claims, **characterized in that** said cable retention clip comprises a channel that is formed laterally with respect to said flexible stem and transversely to said notch, said channel ending with an exit hole formed at the outer part of said engagement member.
